(19) Europäisches Patentamt / European Patent Office / Office européen des brevets

(11) **EP 3 227 080 B1**

(12) **EUROPEAN PATENT SPECIFICATION**

(45) Date of publication and mention
of the grant of the patent:
**05.01.2022 Bulletin 2022/01**

(21) Application number: **15808819.5**

(22) Date of filing: **01.12.2015**

(51) Int Cl.:
***B29C 45/16*** *(2006.01)*      ***B29C 45/56*** *(2006.01)*
***B29C 45/72*** *(2006.01)*

(86) International application number:
**PCT/IB2015/059265**

(87) International publication number:
**WO 2016/088051 (09.06.2016 Gazette 2016/23)**

(54) **BLOCK MOLD**

BLOCKFORM

MOULE-BLOC

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.12.2014 US 201462085809 P**

(43) Date of publication of application:
**11.10.2017 Bulletin 2017/41**

(73) Proprietor: **SHPP Global Technologies B.V.
4612 PX Bergen op Zoom (NL)**

(72) Inventors:
• **NEERINCX, Peter
4612 PX Bergen op Zoom (NL)**

• **HEERKENS, Ruud
4612 PX Bergen op Zoom (NL)**

(74) Representative: **Balder IP Law, S.L.
Paseo de la Castellana 93
5ª planta
28046 Madrid (ES)**

(56) References cited:
EP-A1- 1 829 664          EP-A1- 1 829 664
EP-A1- 1 938 944          EP-A1- 1 938 944
WO-A2-2004/099480          WO-A2-2004/099480
JP-A- H08 244 081          JP-A- H08 244 081
US-A- 5 529 483          US-A- 5 529 483
US-A1- 2008 143 017          US-A1- 2008 143 017
US-A1- 2013 078 444          US-A1- 2013 078 444

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND

Rapid prototyping can involve the fabrication of physical parts using three-dimensional (3D) computer-assisted design (CAD) data. Currently, a primary method of rapid prototyping is 3D printing, such as via selective laser sintering. Not all materials are suitable or compatible with selective laser sintering, however.

SUMMARY

The present disclosure describes a molding system and method for fabricating a thick-walled block that can be used for rapid prototyping via standard cutting or machining techniques.

In an example, the present disclosure describes a molding system for fabricating a block of material, the molding system comprising a first mold section partially enclosing a mold cavity, a first insert slidable along the mold cavity in order to change the size of the mold cavity, a second mold section positionable adjacent to the first mold section to enclose the mold cavity, a material conduit for feeding molding material into the mold cavity, wherein the molding material can solidify in the mold cavity, and a mechanism configured to position the first insert at a plurality of positions along the mold cavity, wherein the mechanism comprises a wedge having an angled surface, wherein the mechanism bears on a corresponding angled surface of the first insert to allow the insert to be positioned at essentially any position along the continuum from a front end of the mold cavity to a practical rear boundary, and the molding system further comprises a sliding locking mechanism coupling the wedge to the first insert.

In another example, the present disclosure describes a method of fabricating a block of material, the method comprising positioning a first mold section adjacent to a second mold section to enclose a mold cavity therebetween, positioning a slidable insert at a first position within the mold cavity to provide a first space having a predetermined thickness at a front end of the mold cavity, injecting molten material into the first space of the mold cavity, allowing the molten material to set to form a first layer, moving the slidable insert to a second position within the mold cavity to provide a second space between the first layer and the front end of the mold cavity, injecting molten material into the second space of the mold cavity, and allowing the molten material to set to form a second layer, the second layer being mechanically and chemically coupled to the first layer to form a block, wherein the positioning the slidable insert at the first position and moving the slidable insert to the second position is performed by an insert positioning mechanism comprising a wedge having an angled surface, wherein the angled surface bears on a corresponding angled surface of the first insert, and the wedge is slidably coupled to the first insert, wherein positioning the first insert comprises moving the first insert to any position along a continuum between a rearward position and a forward position to provide the first space having the predetermined first thickness.

BRIEF DESCRIPTION OF THE FIGURES

FIG. 1 is a cross-sectional side view of a reference example molding system, not belonging to the invention, for fabricating a thick-walled block that that can be used for rapid prototyping.
FIGS. 2A-2I are cross-sectional side views of an example molding system showing steps of an example method of fabricating a block by forming a plurality of layers.
FIGS. 3A and 3B show cross-sectional side views of another reference example molding system, not belonging to the invention, for fabricating a thick-walled block having an alternative example of an insert positioning mechanism.
FIGS. 4A and 4B show example methods of thermally conditioning a molded block to prevent or minimizing cracking or other damage due to shrinking during cooling.

DETAILED DESCRIPTION

In the following Detailed Description, reference is made to the accompanying drawings which form a part hereof. The drawings show, by way of illustration, specific examples in which the present molding systems and methods can be practiced. These examples are described in sufficient detail to enable those skilled in the art to practice, and it is to be understood that other embodiments can be utilized and that structural changes can be made without departing from the scope of the present disclosure. Terms indicating direction, such as front, rear, left, right, up, and down, are generally used only for the purpose of illustration or clarification and are not intended to be limiting. The following Detailed Description is not to be taken in a limiting sense, and the scope of the present disclosure is defined by the appended claims and their equivalents.

As noted above, for materials that cannot be worked with 3D printing techniques, such as selective laser sintering, rapid prototyping can be achieved with standard cutting or machining techniques, such as milling and turning of a pre-made block of material. For some materials, however, standard cutting or milling techniques are not cost effective due to the cost of producing the pre-made block via traditional extrusion techniques. For example, forming blocks of polycarbonate or polyetherimide (PEI, such as ULTEM resin, sold by SABIC Innovative Plastics of Pittsfield, MA) can be cost prohibitive due to the extremely high startup costs associated with setting up an extrusion line to produce pre-made blocks.

This disclosure describes molding systems and methods for fabricating a thick-walled block that can be used for rapid prototyping via standard cutting or machining techniques. The molding system and method of the present disclosure can be used to form blocks of a material that are not suitable for 3D printing via selective laser sintering (SLS) or that cannot be cost-effectively fabricated using typical extrusion techniques. Examples of materials for which the molding systems and methods of the present disclosure may be particularly useful include, but are not limited to: polycarbonates, such as those commercially available under the trade name LEXAN from the Innovative Plastics division of SABIC, Pittsfield, Massachusetts, USA; polyetherimides (PEI), such as those commercially available under the trade name ULTEM from the Innovative Plastics division of SABIC; polymethy methacrylate polymers (PMMA); polyethylene terephthalate polymers (PET); polybutylene terephthalate polymers (PBT), such as those commercially available under the trade name VALOX from the Innovative Plastics division of SABIC; polystyrene polymers; and acrylonitrile-butadiene-styrene polymers (ABS), such as those commercially available under the trade name CYCOLAC from the Innovative Plastics division of SABIC.

The molding system and method described herein can result in an over-molding process that can decrease overall cooling time compared to single-layer injection molding of the same material. The cooling time of a molding material can be subject to equation [1]:

$$t \propto 2n \times d^2 \qquad [1]$$

where $t$ is the total cooling time required for a block comprising one or more layers, $n$ is the number of layers in the block, and d is the thickness of each layer. For example, if a block formed out of a particular material is formed as a single layer having a thickness of 50 millimeters (mm), the cooling time for that block may be 5000 seconds, or about 83 minutes. If a similar block is formed as 25 layers of the same material, with each layer having a thickness of 2 mm, then the total cooling time for the block can be reduced to only 200 seconds (about 3.33 minutes). As demonstrated through equation [1], optimization of cooling time can be relatively easy, namely: the layer thickness should be as thin as possible.

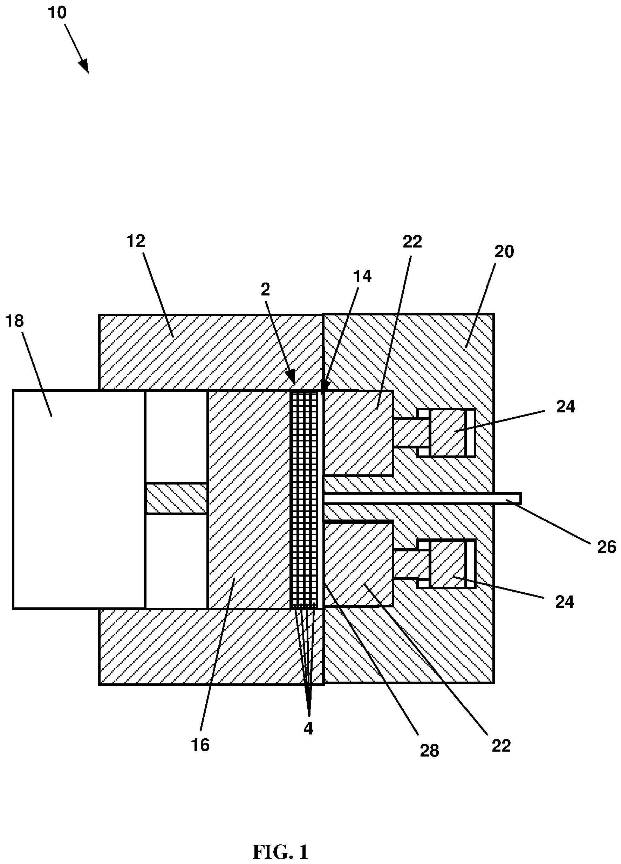

FIG. 1 is a cross-sectional view of a reference example molding system 10, not belonging to the invention, for fabricating a relatively thick block 2 made from a material that is difficult to easily and quickly mold in a single-layer block. The molding system 10 can be configured to form the block 2 as a plurality of layers 4 that can each be deposited sequentially and individually and allowed to cool to form the overall block 2. In the example shown in FIG. 1, the molding system 10 can include a first mold section 12, also referred to herein as a rear mold section 12, that defines a first mold cavity 14. A first insert 16, also referred to herein as a rear insert 16, can be positioned inside the mold cavity 14 and can be slidable in a forward and backward direction (e.g., left to right in FIG. 1) inside the mold cavity 14 to a plurality of positions relative to the rear mold section 12. The slidable rear insert 16 can move relative to the rear mold section 12 in order to change a size of the mold cavity 14 in the direction of movement of the rear insert 16 (e.g., left-to-right in FIG. 1). The molding system 10 can include a first positioning mechanism 18, also referred to herein as a rear insert positioning mechanism 18, configured to move the rear insert 16 back and forth in the direction of movement in order to control the size of the mold cavity 14.

The molding system 10 can also include a second mold section 20, also referred to herein as a front mold section 20. The front mold section 20 can define a second mold cavity (not shown) that can be disposed adjacent to the first mold cavity 14 to form an overall mold cavity. The front mold section 20 can be disposed adjacent to the rear mold section 12 in order to enclose the mold cavity 14. The molding system 10 can include one or more mechanisms (not shown) to compress the front mold section 20 against the rear mold section 12, or vice versa, to ensure that molten material injected into the mold cavity 14 is not able to pass between the rear mold section 12 and the front mold section 20. One or more second inserts 22, also referred to as one or more front inserts 22, can be included within the front mold section 20. The front inserts 22 can be configured to position the block 2 within the mold cavity 14, for example to ensure that the block 2 is spaced from a location where new molten material is introduced into the mold cavity 14 to form a new layer 4, as described in more detail below. One or more second positioning mechanisms 24, also referred to herein as front insert positioning mechanisms 24, can be included and configured to move the front inserts 22 back and forth relative to the front mold section 20.

A material conduit 26 can pass through one or more of the rear mold section 12, the rear insert 16, the rear insert positioning mechanism 18, the front mold section 20, one or more of the front inserts 22, or one or more of the front insert positioning mechanisms 24. As shown in the example of FIG. 1, the material conduit 26 can pass through the front mold section 20 to allow molten material to be deposited at a front end 28 of the mold cavity 14 during injection.

The rear insert positioning mechanism 18 can be configured to move the rear insert 16 to a plurality of positions along the mold cavity 14 relative to the rear mold section 12. Each of the plurality of positions along the mold cavity 14 can correspond to one of the plurality of layers 4 that form the block 2, for example with a first position placing a front surface of the rear insert 16 within the mold cavity 14 relative to the front end 28 of the front mold section 20 at a distance equal or approximately equal to a desired thickness of a first layer 4. Similarly, a second position can be spaced from the first position by a distance equal or approximately equal to a desired thickness of a second layer 4, and so on. As described in more detail below, the rear insert positioning mechanism 18 can be configured to position the rear insert 16 along a continuum of essentially an infinite number of positions between the front end 28 of the mold cavity 14 and a rear-most position so that the thickness of a particular layer 4 can be any thickness desired. Alternatively, the rear insert positioning mechanism 18 can be configured to position the rear insert 16 at each of a plurality of discrete positions within the mold cavity 14.

The rear insert positioning mechanism 18 and the front insert positioning mechanisms 24 are shown generically as blocks in FIG. 1. As will be appreciated by a person of skill in the art, the positioning mechanisms 18, 24 can comprise any mechanism capable of moving the inserts 16, 22 and the block 2. In an example, each insert positioning mechanism 18, 24 can comprise one or more control systems that are configured for automatic movement of one or more of the inserts 16, 22, for example according to a preprogrammed order of movement of the inserts 16, 22 and injection of molten material into the mold cavity 14 to form the layers 4 of the block 2.

It may also be desirable for the rear insert positioning mechanism 18 be able to withstand the force produced by molten material as it is injected into the mold cavity 14 via the material conduit 26, e.g., without allowing the rear insert 16 to move rearward (e.g., to the left in FIG. 1) and change the size of the mold cavity 14. As the molten material is injected through the material conduit 26, it can generate a force from the front toward the back of the mold cavity 14 (e.g., from right to left in FIG. 1). The rear insert positioning mechanism 18 can be configured to withstand this force without allowing the rear insert 16 to move rearward (e.g., to the left in FIG. 1), which would undesirably change the size of the mold cavity 14. The one or more front insert positioning mechanisms 24 can also be configured to withstand the force exerted by the molten material being injected into the mold cavity 14 through the material conduit 26, e.g. to prevent the one or more front inserts 22 from moving.

The rear insert positioning mechanism 18 can also be configured to exert sufficient force to provide for compression on the molten material in the mold cavity 14 after the molten material has been injected. In an example, the rear insert positioning mechanism 18 can be configured to provide for injection compression molding of the molten material in the mold cavity 14. The term "injection compression molding," as used herein, can refer to a process wherein the molten material is compressed within the mold cavity while it solidifies after a predetermined amount of the molten material is fed into the mold cavity. Injection compression molding can involve controlled variation of the mold cavity volume during injection or the holding pressure phases of the molding cycle, or both. The holding pressure can be applied across an entire surface of the molding so that pressure within the mold cavity can be constant or substantially constant and consistent. Injection compression molding can provide for one or more of better dimensional stability, reduced material shearing, reduction in the necessary injection pressure, and reduction in cycle time. Injection compression molding can also provide for improved holding pressure effect, which can minimize sink marks and warping of the plastic material. The rear insert positioning mechanism 18 can be configured to provide sufficient compression force necessary to achieve injection compression molding of the molten material.

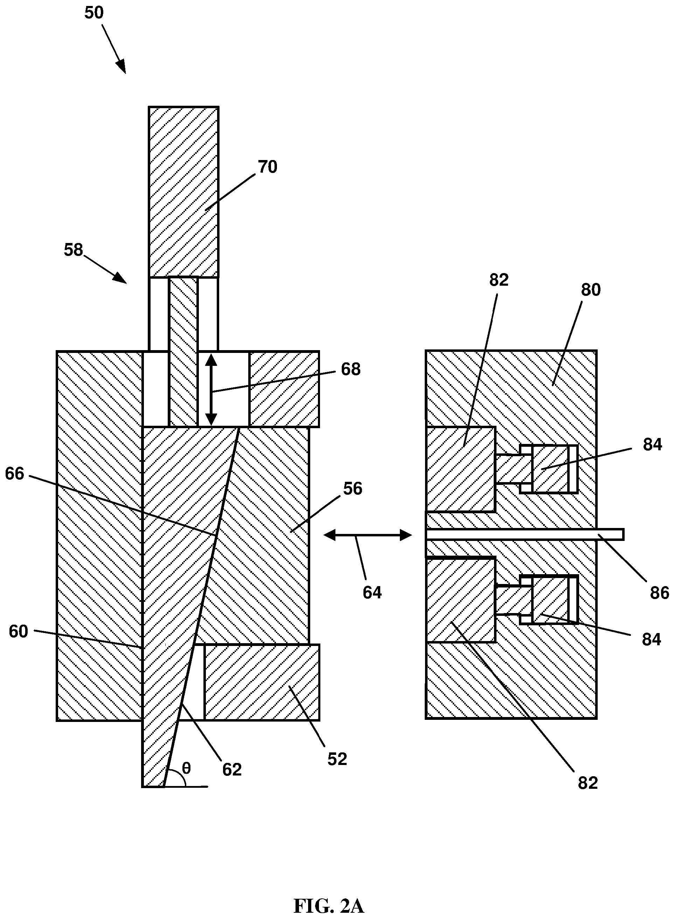

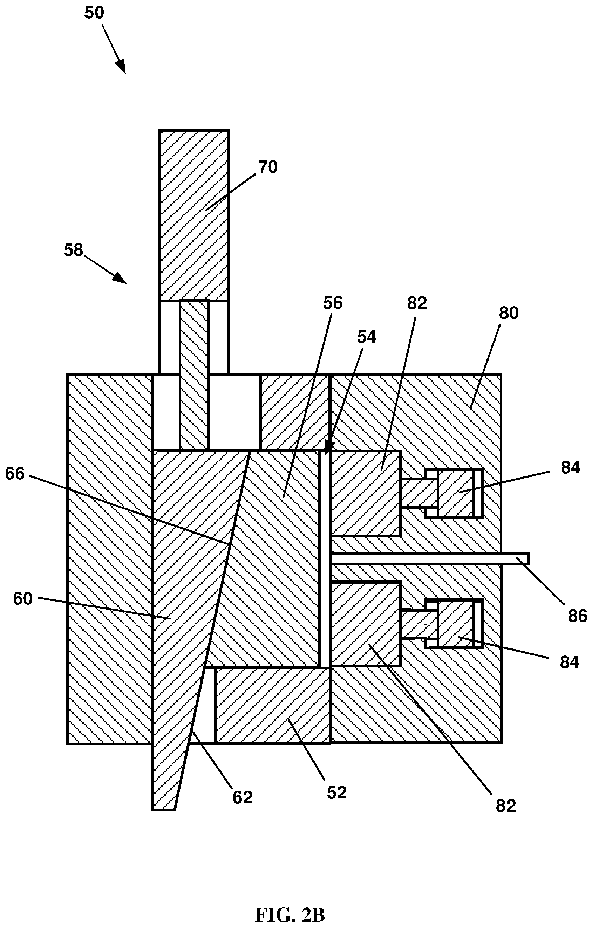

FIGS. 2A-2I show cross-sectional side views of another example molding system 50 for fabricating a block 2 as a plurality of layers 4. The molding system 50 is similar to the generic molding system 10 described above with respect to FIG. 1, but is shown with a specific example of the rear insert positioning mechanism, described in more detail below. Like the molding system 10, the molding system 50 can include a first mold section 52, also referred to herein as a rear mold section 52, that defines a first mold cavity 54 (FIG. 2B). A first insert 56, also referred to herein as a rear insert 56, can be positioned inside the mold cavity 54 and can be slidable inside the mold cavity 54 relative to the rear mold section 52 along a plurality of positions in order to adjust a dimension of the mold cavity 54. A first positioning mechanism 58, also referred to herein as a rear insert positioning mechanism 58, can be configured to move the rear insert 56 to a plurality of positions within the mold cavity 54.

As shown, for example in FIG. 2A, rather than being depicted as a generic block, the rear insert positioning mechanism 58 is shown as including a wedge 60 comprising an angled surface 62 that is angled relative to a direction of motion of the rear insert 56 (depicted as arrows 64 in FIG. 2A) at an angle θ. The rear insert 56 can also include a corresponding angled surface 66 that is also angled relative to the direction of motion 64. Preferably, the angle of the angled surface 66 of the rear insert 56 is equal or substantially equal to the angle θ as the wedge angled surface 62. The angled surface 66 of the rear insert 56 can be abutted against the wedge angled surface 62 such that the angled surface 66 mates with the wedge angled surface 62 so that when the wedge 60 is moved in the wedge direction of motion (depicted as arrows 68 in FIG. 2A), the wedge angled surface 62 will engage the insert angled surface 66 to move the rear insert 56 in the direction of motion 64.

In an example, the rear insert 56 and the wedge 60 can include a sliding locking mechanism (not shown) that keeps the wedge angled surface 62 engaged with the insert angled surface 66, e.g., by preventing the wedge angled surface 62 from being pulled away from the insert angled surface 66. In a example, the sliding locking mechanism can include one or more tongues on the wedge 60 that can be inserted into and can slide along one or more corresponding grooves in the rear insert 56, or vice versa with one or more tongues on the rear insert 56 that can be inserted into and can slide along one or more corresponding groove in the wedge 60. In an example, the sliding locking mechanism can comprise a dove tail sliding mechanism.

A sliding locking mechanism can ensure that when the wedge 60 is moved in a first direction (e.g., down in FIG. 2A) then the rear insert 56 will be driven in a corresponding first direction (e.g., to the right in FIG. 2A), and when the wedge 60 is moved in a second direction that is generally opposite of the first direction (e.g., up in FIG. 2A), then the rear insert 56 will be driven in a corresponding second direction opposite of the corresponding first direction (e.g., to the left in FIG. 2A). In the example shown in FIG. 2A, the direction of motion 68 of the wedge 60 is perpendicular or substantially perpendicular to the direction of motion 64 of the rear insert 56 as it is being driven by the wedge 60. In an example, the direction of motion 64 of the rear insert 56 is horizontal or substantially horizontal within the mold cavity 54 while the direction of motion 68 of the wedge 60 is vertical or substantially vertical, as depicted in FIG. 2A.

The rear insert positioning mechanism 58 can also include a driving piston 70 that can be configured to move the wedge 60. The driving piston 70 can supply sufficient force to drive the wedge 60 in the wedge direction of motion 68, which can, in turn, drive the rear insert 56 in the insert direction of motion 64.

In an example, the angle θ of the wedge angled surface 62 can be less than 90°. The specific value of the angle θ can be selected depending on a desired force to be exerted by the driving piston 70, e.g., to withstand the injection force produced by the molten material when it is injected into the mold cavity 54 or the force necessary to provide for injection compression molding of the molten material in the mold cavity 54. The force needed to be applied by the driving piston 70 can be directly related to the value of the angle θ. The angle θ can also be selected to control the motion of the rear insert 56 as it is driven by the wedge 60, for example because the angle θ can determine the ratio of the distance that the wedge 60 travels in the direction of motion 68 that is translated to the rear insert 56 in the direction of motion 64. In an example, the angle θ can be from about 45° to about 90° (e.g., an angle relative to the direction of motion 68 of the wedge 60 that is from about 0° to about 45°), such as from about 60° to about 88° (e.g., an angle relative to the direction of motion 68 that is from about 2° to about 30°), for example from about 65° to about 85° (e.g., an angle relative to the direction of motion 68 that is from about 5° to about 25°). In certain examples, the angle θ can be about 85° (e.g., an angle relative to the direction of motion 68 of the wedge 60 that is about 5°), about 80° (e.g., an angle relative to the direction of motion 68 that is about 10°), about 75° (e.g., an angle relative to the direction of motion 68 that is about 15°), about 70° (e.g., an angle relative to the direction of motion 68 that is about 20°), or about 65° (e.g., an angle relative to the direction of motion 68 that is about 25°).

A mechanism that can provide for continuous or substantially continuous positioning of the rear insert 56, such as the rear insert positioning mechanism 58, can provide for essentially infinitely adjustable control over the positioning and movement of the rear insert 56, which in turn can provide for essentially infinite adjustability of the thickness of the layers 4 in order to optimize fabrication of the block 2. For example, the amount of time it takes each layer 4 of the block 2 to set can depend on the specific material being molded as well as the thickness of each layer 4, as described above with respect to Equation [1]. Thus, an optimal thickness of the layers 4 for a desired thickness of the block 2 can vary greatly depending on the material being molded. For example, the wedge 60 comprising the angled surface 62 that can bear on the corresponding angled surface 66 of the rear insert can allow the rear insert 56 to be positioned at essentially any position along the continuum from a front end of the mold cavity 54 to a practical rear boundary, e.g., a rear-most position that the rear insert 56 can be positioned while still being securely held within the rear mold section 52. Therefore, the same system 50 can be used to produce a first block 2 made from a first material where an optimal thickness of the layers 4 is about 0.1 mm and to produce a second block 2 made from a second material where the optimal thickness of the layers 4 is 10 mm, or can be used to make blocks from layers having thicknesses anywhere in between. The wedge 60 can also provide more control over the force exerted onto the rear insert 56, which in turn can provide more control over the force exerted on the molding material within the mold cavity 54. In addition, the wedge 60 can improve, and even optimize, the transmission of load by amplification of the nominal force applied by the driving piston 70. The angle between the wedge 60 and the rear insert 56 can result in the ratio of the force exerted of force applied by the driving piston 70 to the holding force that the rear insert 56 can apply on the injected polymer in the mold cavity 54 resulting in a small force produced by the driving piston 70 being able to hold high forces generated by the pressure of the injected polymer. In some examples, depending on the angle and this force ratio, the system can be self-breaking.

The molding system 50 can also include a second mold section 80, also referred to herein as a front mold section 80. The front mold section 80 can define a second mold cavity (not shown) that can be disposed adjacent to the first mold cavity 54 to form an overall mold cavity. The front mold section 80 can be disposed adjacent to the rear mold section 52 in order to enclose the mold cavity 54. The molding system 50 can include one or more mechanisms (not shown) to compress the front mold section 80 against the rear mold section 52, or vice versa. One or more second inserts 82, also referred to as one or more front inserts 82, can be included within the front mold section 80. The front inserts 82 can be configured to position the block 2 within the mold cavity 54. One or more second positioning mechanisms 84, also referred to herein as front insert positioning mechanisms 84, can be included and configured to move the front inserts 82 back and forth relative to the front mold section 80.

A material conduit 86 can pass through one or more of the rear mold section 52, the rear insert 56, the rear insert positioning mechanism 58, the front mold section 80, one or more of the front inserts 82, or one or more of the front insert positioning mechanisms 84. As shown in the example of FIG. 2A, the material conduit 86 can pass through the front mold section 80.

FIGS. 2A-2I show a schematic representation of an example method for fabricating a block 2 comprising a plurality of layers 4 using the system 50. First, the molding system 50 is provided or received. The rear mold section 52 and the front mold section 80 can be open and separated, as shown in FIG. 2A. Next, the molding system 50 can be closed by positioning the rear mold section 52 adjacent to the front mold section 80 so that the mold cavity 54 is formed and surrounded by the mold sections 52, 80, as shown in FIG. 2B. The rear mold section 52 can be clamped or otherwise secured to the front mold section 80. The rear insert 56 can be positioned by the rear insert positioning mechanism 58 at a first position corresponding to a first layer 4 of the block 2 so that the mold cavity 54 has a thickness that is relatively small (e.g., in the left-to-right direction in FIG. 2B). The initial thickness of the mold cavity 54 (which corresponds to the thickness of a first layer 4 formed in the mold cavity 54) can vary depending on the polymer or other material being used to form the block 2, for example based on solidifying properties including setting time, shrinkage, etc. In an example, the initial thickness of the mold cavity 54 can be from about 0.5 mm to about 5 mm, such as about 1 mm to about 3 mm, for example about 2 mm.

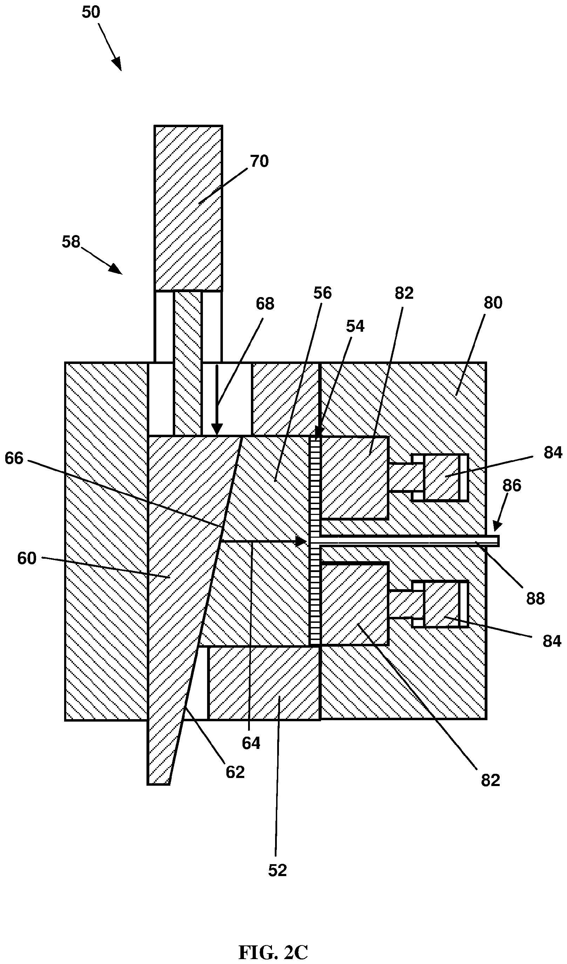

Next, a molten material 88 (e.g., a molten polymer) can be injected into the mold cavity 54 through the material conduit 86, as shown in FIG. 2C. The rear insert positioning mechanism 58 (e.g., the wedge 60 and the driving piston 70) can be configured to provide a compression force during injection of the molten material 88 or soon thereafter in order to provide for injection compression molding of the molten material 88 within the mold cavity 54, as described above. In an example, the wedge 60 can be driven downward in the direction of motion 68, which in turn can drive the rear insert 56 forward (e.g., to the right in FIG. 2C) in the direction of motion 64 to provide the compression necessary for injection compression molding.

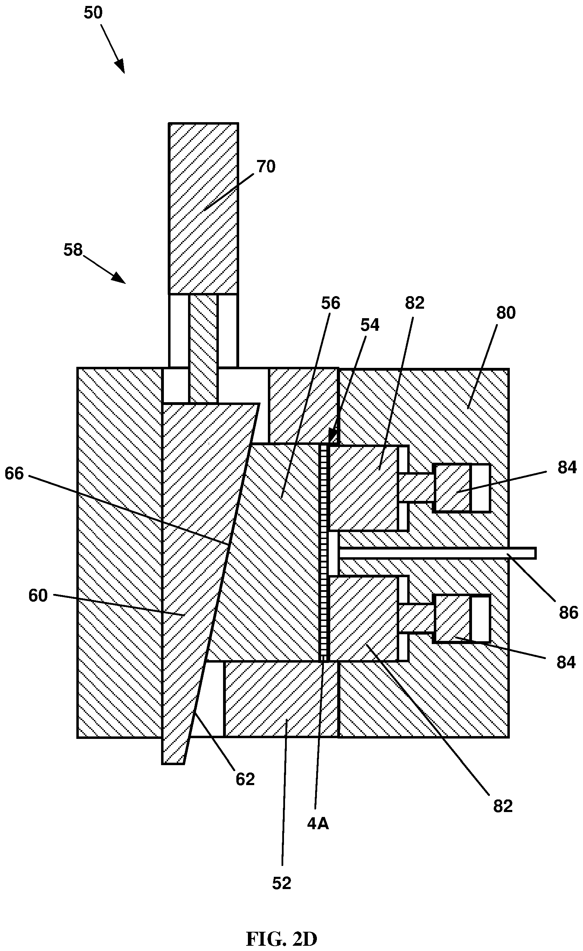

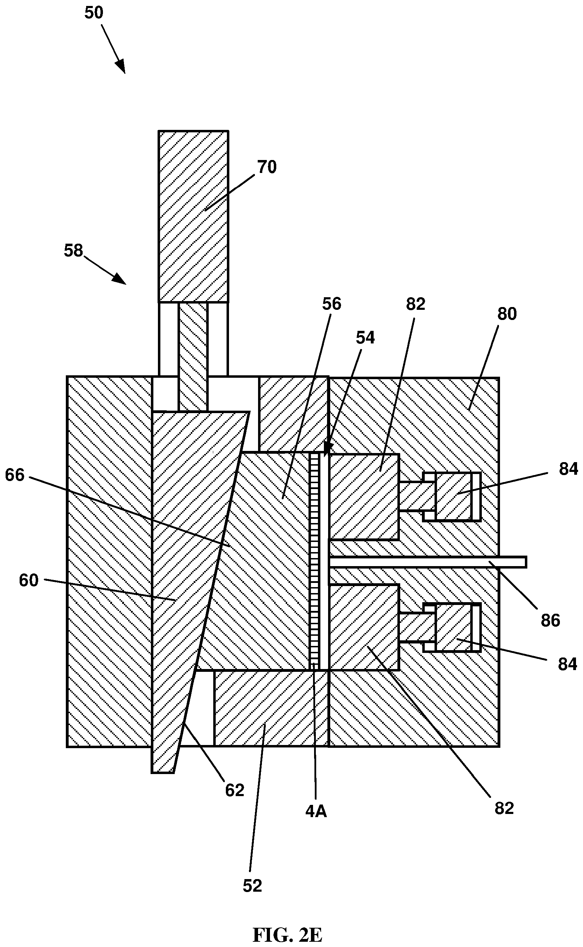

After the molten material 88 is injected, it can be allowed to solidify to form a first molded layer 4A of the block 2 (FIG. 2D). Next, the wedge 60 can be raised by the driving piston 70. If the wedge 60 is coupled to the rear insert 56 by a sliding locking mechanism, described above, then the upward movement of the wedge 60 can cause the rear insert 56 to move rearward (e.g., to the left in FIG. 2C) so that the rear insert 56 is positioned in a second position corresponding to a second layer 4 of the block 2. The one or more front inserts 82 can push the first molded layer 4A rearward so that the first molded layers 4A remains in contact with the rear insert 56, as shown in FIG. 2D. The one or more front insert positioning mechanisms 84 can also be configured to push the rear insert 56 rearward to be in contact with the wedge 60 if a sliding locking mechanism between the wedge 60 and the rear insert 56 is not present. The one or more front inserts 82 can be withdrawn back into the front mold section 80, leaving a space within the mold cavity 54, as shown in FIG. 2E.

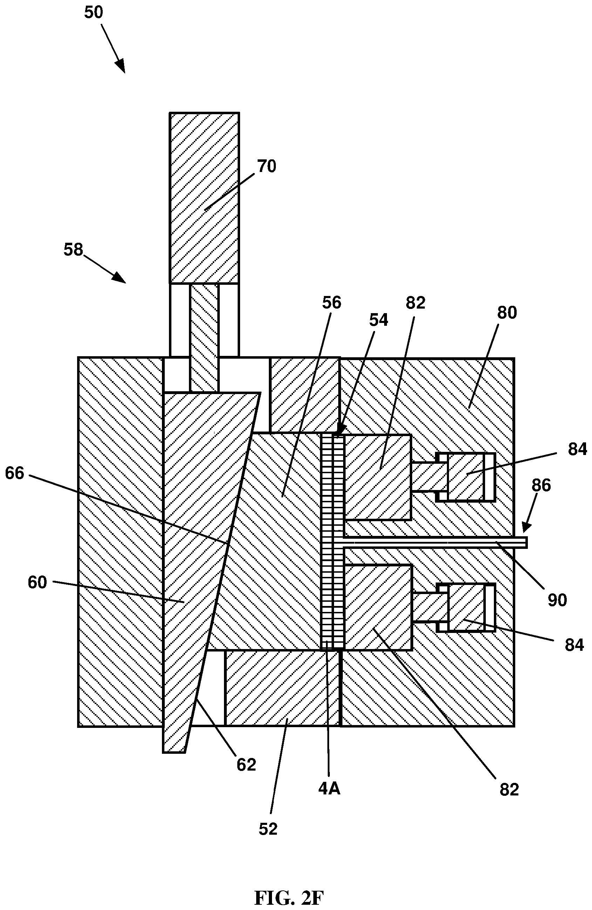

Additional molten material 90 can be injected into the space within the mold cavity 54 through the material conduit 86, as shown in FIG. 2F, similar to the step of the method described above with respect to FIG. 2C. The additional molten material 90 can be the same material as the molten material 88 injected in the step of FIG. 2C, or the additional molten material 90 can be a different material, depending on the desired properties of the block 2. As with the step depicted in FIG. 2C, the rear insert positioning mechanism 58 can be configured to provide a compression force on the additional molten material 90 within the mold cavity 54 to provide for injection compression molding.

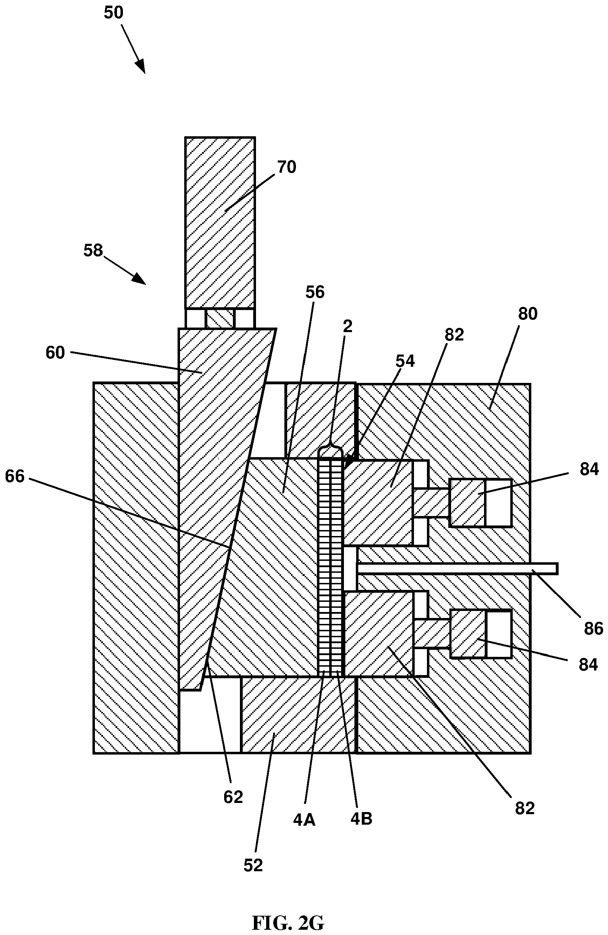

The additional molten material 90 can be allowed to set within the mold cavity 54 to form a second molded layer 4B (FIG. 2G). The second molded layer 4B will be mechanically bonded to the first molded layer 4A, e.g., because the layers 4A, 4B were molded together within the same mold cavity 54 with the molten material 90 being allowed to set while it is in contact with the first layer 4A. The coupled layers 4A, 4B can form a block 2 (FIG. 2G) of the molded materials. Next, the wedge 60 can be raised by the driving piston 70, and, if the wedge 60 is coupled to the rear insert 56 by a sliding locking mechanism then the upward movement of the wedge 60 can cause the rear insert 56 to move rearward (e.g., to the left in FIG. 2F), e.g., to a third position that can correspond to a third layer 4 of the block 2. The one or more front inserts 82 can push the block 2 comprising the first molded layer 4A and the second molded layer 4B rearward so that the block 2 remains in contact with the rear insert 56, as shown in FIG. 2G.

In the example method depicted in FIGS. 2A-2G, the block 2 has reached its desired thickness with only two layers 4A, 4B, as shown in FIG. 2G. If additional molded layers 4 are needed in order to achieve a desired thickness of the block 2 (for example the four layers 4 depicted in FIG. 1), however, then the steps depicted in FIGS. 2E, 2F, and 2G can be repeated to form additional layers 4 (e.g., a third layer, a fourth layer, a fifth layer, and so on). These steps can be repeated as many times as needed to achieve the desired thickness for the block 2.

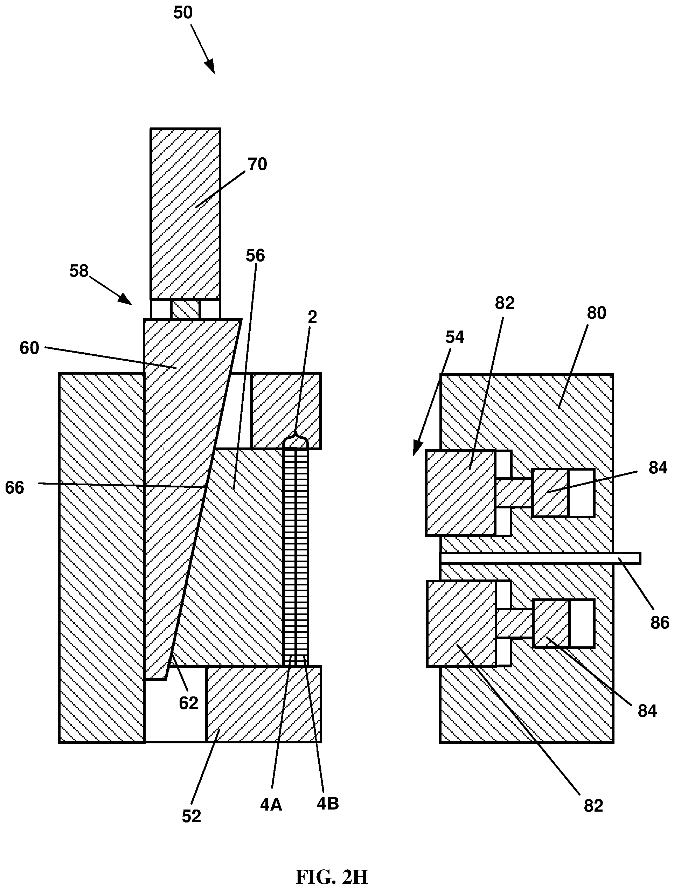

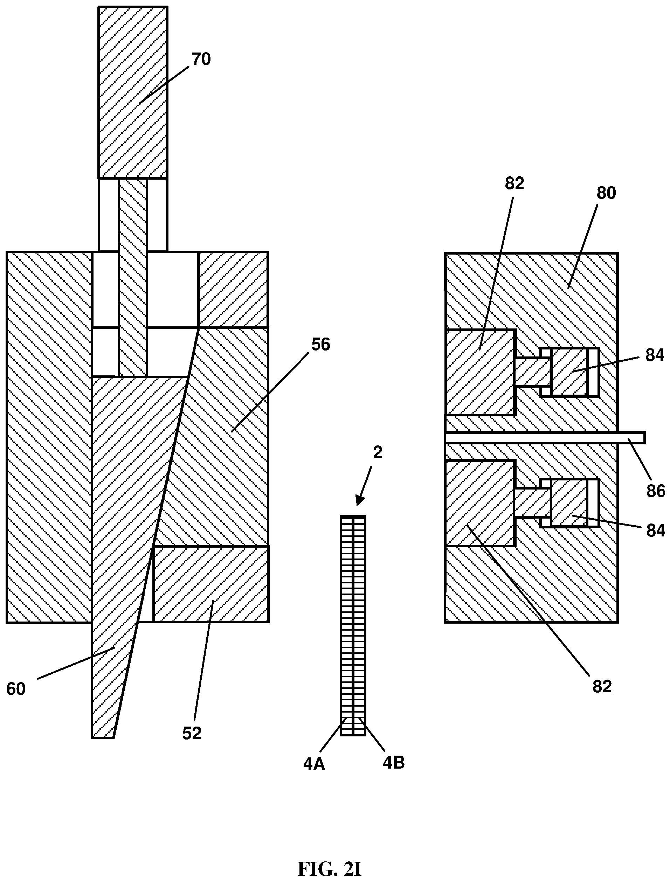

After reaching a desired thickness of the block 2, e.g., by molding the necessary number of layers 4 through the steps depicted in FIGS. 2A-2G, the molding system 50 can be opened by separating the rear mold section 52 from the front mold section 80, as shown in FIG. 2H. The block 2 can be expulsed from the space of the mold cavity 54, for example by driving the wedge 60 with the driving piston 70 in order to push the rear insert 56 forward (e.g., to the right), as shown in FIG. 2I.

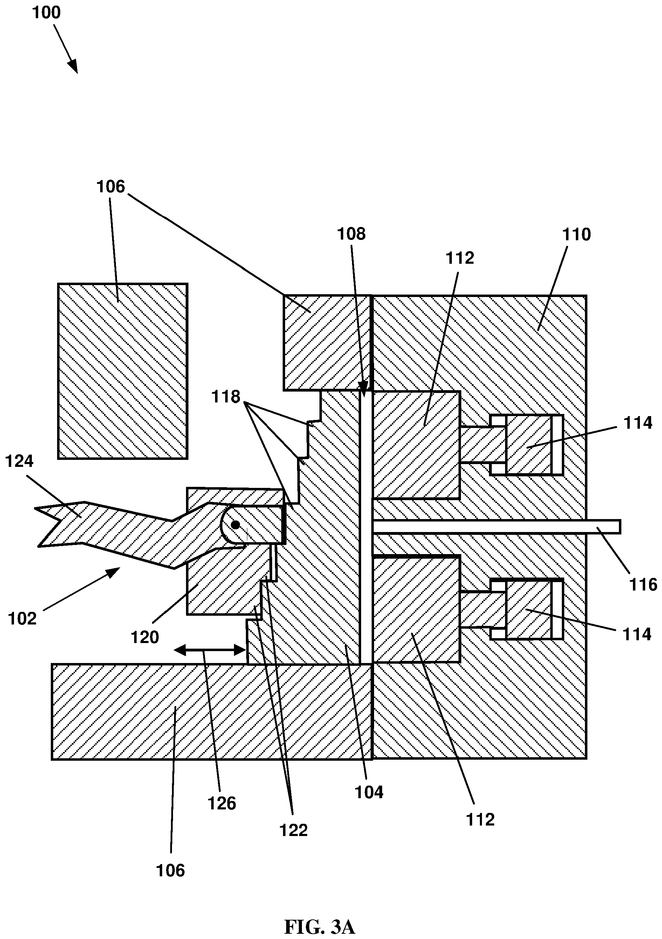

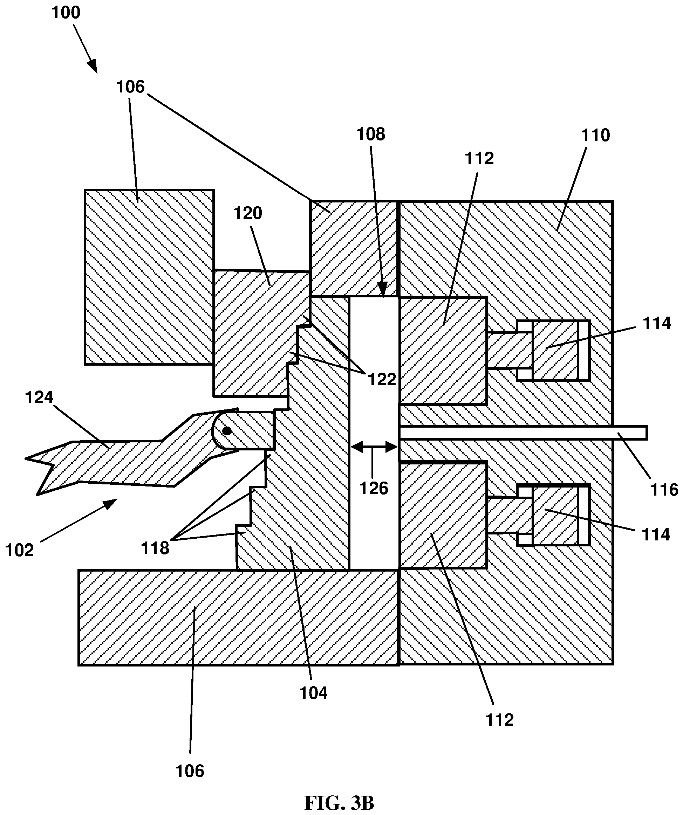

The molding system 50 shown in FIGS. 2A-2I includes the rear insert positioning mechanism 58 comprising the wedge 60 with the angled surface 62 that can bear on the corresponding angled surface 66 of the rear insert 56. As noted above, this design can provide for greater control over the thickness of the layers 4 that form the block 2 and over the force exerted on the molding material by the rear insert 56. However, continuous and infinite control over the positioning of the rear insert 56 may not be necessary. FIGS. 3A and 3B show a reference example molding system 100, not belonging to the invention, with an alternative first insert positioning mechanism 102, also referred to as a rear insert positioning mechanism 102, that can provide for positioning of a first insert 104, also referred to as a rear insert 104, relative to a first mold section 106, also referred to as a rear mold section 106. The rear mold section 106 can partially enclose a mold cavity 108. The rear insert 104 can be positioned in and slidable along the mold cavity 108 relative to the rear mold section 106 in order to change a size of the mold cavity 108.

The molding system 100 can also include a second mold section 110, also referred to herein as a front mold section 110. The front mold section 110 can be posited adjacent to the rear mold section 106 in order to enclose the mold cavity 108. One or more second inserts 112, also referred to as one or more front inserts 112, can be included within the front mold section 110, which can be moved back and forth relative to the front mold section 110 by one or more second positioning mechanisms 114, also referred to herein as front insert positioning mechanisms 114. A material conduit 116 can provide a pathway for molten material to be injected into the mold cavity 108.

The rear insert positioning mechanism 102 can be configured to move the rear insert 104 back and forth to a plurality of discrete positions relative to the rear mold section 106. In the example shown in FIGS. 3A and 3B, the rear insert positioning mechanism 102 can include a ratcheting-type mechanism for positioning the rear insert 104 at a plurality of discrete positions relative to the rear mold section 106. The rear insert 104 can include a plurality of ratchet stairs 118 and the rear insert positioning mechanism 102 can include a pawl 120 with corresponding stair-like teeth 122 that can engage the ratchet stairs 118 of the rear insert 104. The rear insert positioning mechanism 102 can also include an expulsion rod 124 coupled to the rear insert 104. The pawl 120 can begin in a first position, e.g., a bottom position, as shown in FIG. 3A. The expulsion rod 124 can be biased to pull the rear insert 104 in a rearward direction, e.g., to the left in FIG. 3A, against the pawl 120. The pawl 120 can be biased in a downward direction. The teeth 122 of the pawl 120 can engage the ratchet stairs 118, which can, in addition to the pulling of the expulsion rod 124, prevent the rear insert 104 from sliding in the direction of motion 126 of the rear insert 104 (e.g., left to right in FIG. 3A). The engagement between the teeth 122 of the pawl 120 and the ratchet stairs 118 of the rear insert 104, along with the biasing force against the pawl 120, can prevent the pawl 20 from sliding vertically.

After molten material is injected into the mold cavity 108 and allowed to set, the biasing force against the pawl 120, e.g., keeping the pawl 120 biased downward, can be overcome and the pawl 120 can be moved upward by at least one position relative to the rear insert 104. Each of the teeth 122 of the pawl 120 can move up one position and engage a new one of the ratchet stairs 118 of the rear insert 104. The biasing force pulling on the expulsion rod 124 can move the rear insert 104 rearward by one position relative to the rear mold section 106, as shown in FIG. 3B, so that the rear insert 104 and the block within the mold cavity 108 (not shown in FIGS. 3A and 3B) provide additional space for an additional layer of material to be added to the block.

The ratcheting processing can be repeated until a desired number of layers have been molded and the block is complete, at which point the molding system 100 can be opened by separating the rear mold section 106 from the front mold section 110. The biasing force on the expulsion rod 124 can be overcome and the expulsion rod 124 can be driven forward to expulse the block from the mold cavity 108 and to reposition the rear insert 104 in the forward-most starting position. As the rear insert 104 moves forward, the ratchet stairs 118 of the rear insert 104 move out of the way of the teeth 122 of the pawl 120 so that the biasing force acting on the pawl 120 can drive the pawl 120 back downward to its starting position where the process can be started over again.

A mechanism that can provide for positioning of the rear insert 104 to a plurality of discrete positions, such as the rear insert positioning mechanism 102, can be used when the properties and setting behavior of the molding material is well known and the molding system 100 is to be used only for that well-known molding material. In such a scenario, it can be more efficient, economical, and reliable to use a system with discrete positioning of the rear insert 104 rather than the infinitely adjustable system 50 depicted in FIGS. 2A-2I, which provides more flexibility, but can also be more complicated and can have more potential for malfunction. The molding system 100 can be particularly useful for an overall manufacturing operation where the operation of the molding system 100 will not change, e.g., in a large-scale manufacturing process where the molding system 100 is just one piece of equipment in the process.

For some molding materials, the method of preparing a block, such as the method shown in FIGS. 2A-2I to form the block 2, may need to be modified to accommodate mechanical properties of the molding material. In an example, the molding material used to form the block 2 can shrink relatively rapidly due to cooling after the block 2 is removed from the mold cavity 54, e.g., if the molding material has one or more of a relatively high coefficient of thermal expansion (CTE), a relatively high specific heat (e.g., the temperature change of a set mass of the material per unit of heat energy added or remove), and a relatively high heat conductivity (e.g., the rate at which heat transfers from the interior of the block 2 toward the exterior of the block). Some molding materials that cool relatively quickly and shrink relatively rapidly when cooled can also have a relatively low ductility such that, as the molding material shrinks relatively rapidly, the material cannot resist the internal tension being created by the shrinking, which can lead to cracking and failure of the bock 2.

In addition, for molding materials that are processed at relatively high temperature, e.g., due to a high melting temperature needed to make the material workable for a molding process, cracking or failure of the molding material can occur even if the material has a CTE, specific heat, and ductility that could be expected to accommodate shrinking of the material because: (a) there is a large thermal driving force due to the large difference in temperature between the block 2 and the surrounding air; and (b) the material must accommodate such a large change in temperature to get the block 2 down to a usable temperature, e.g., room temperature.

An example of a material that exhibits this kind of cracking and failure when forming a block 2 by the methods described herein is polyether ether ketone (PEEK). PEEK has a relatively high melting temperature, about 343 °C, so that when a PEEK block 2 can be at a very high temperature when it is ejected from the molding system 50. PEEK also has a relatively high CTE, which can be as high as about 140 parts per million by weight per degree Kelvin (ppm/°K) when PEEK is above its glass transition temperature (about 143 °C), and about 445 ppm/°K. PEEK also has a relatively high heat conductivity and specific heat, e.g., it will cool quickly, and it has a relatively low ductility. In short, a block 2 made of PEEK will come out of the mold at a high temperature, e.g., as high as 300 °C, and will thus be driven to cool rapidly due to its high heat conductivity, specific heat, and the heat transfer to the air around the block 2. This will lead to a high shrink rate of the PEEK block 2 due to PEEK's high CTE, which can lead to the PEEK block 2 cracking because its ductility cannot accommodate the high shrink rate.

In some examples, and in particular with blocks 2 of larger sizes (e.g., larger cross-sectional areas or larger thicknesses, or both), the block 2 can experience temperature gradients between interior regions of the block 2 compared to regions near the block surface. For example, for a large block 2 having a cross-sectional area of at least 2000 cm$^2$ (e.g., a 50 cm by 50 cm block (cross-sectional area 2500 cm$^2$), and/or having a thickness of at least 5 cm (e.g., an 8 cm thick block), or even less for molding materials having the unfavorable thermal properties described above, a core of the block 2 can remain relatively higher than regions near the block surfaces because it can take a while for the thermal energy to transfer from the core to the outer block surfaces where it can be expelled. The temperature gradient can lead to different regions of the block 2 shrinking by different amounts and at different rates. When the temperature gradient becomes large enough, the block 2 can crack or otherwise fail even if the molding material of the block does not have the unfavorable thermal properties described above.

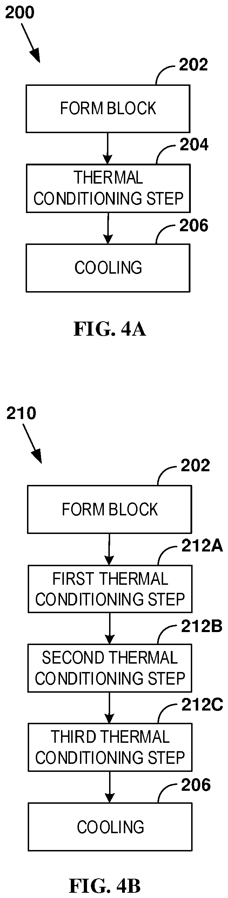

FIGS. 4A and 4B show examples of methods 200, 210 of thermally treating a block after it has been molded with the molding systems and molding methods described herein, e.g., a block 2 molded by the molding systems 50 in FIG. 1 or 100 in FIGS. 3A and 3B and by the method of FIGS. 2A-2I. One or both of the methods 200, 210 can be particularly useful for molding materials having one or more of: a relatively high melting temperature, e.g., greater than about 300 °C, or processing temperature, e.g., greater than about 350 °C, such as at least 400 °C; a relatively high CTE, e.g., greater than about 30 ppm/°K, such as greater than about 40 ppm/°K, for example 45 ppm/°K (as with PEEK) or greater ; a relatively high specific heat, e.g., greater than about 0.2 kilojoules per kilogram degree Kelvin (kJ/kg·°K), such as greater than about 0.3 kJ/kg·°K, for example 0.32 kJ/kg·°K (as with PEEK) or greater; a relatively high thermal conductivity, e.g., at least about 0.15 watts per meter degree Kelvin (W/m °K), such as at least about 0.2 W/m·°K, for example 0.25 W/m·°K (e.g., the thermal conductivity of PEEK) or greater; and a relatively low ductility, e.g., less than about 5%. As noted above, PEEK is an example of such a molding material. Other examples for which the example method 200 of FIG. 4 may be useful include, but are not limited to, polystyrene, polymethyl methacrylate (PMMA), styrene acrylonitrile (SAN), all of which are not typically molded due to their low ductility. The method 200 can also be useful for larger blocks 2, even if the molding materials of the block do not have the unfavorable thermal properties described above in order to avoid or minimize the chances of cracking or block failure due to uneven temperature distribution or uneven block 2 shrinking, or both.

As shown in FIGS. 4A and 4B, the method 200 can include forming a block 202. In an example, forming the block 202 be similar or identical to the methods of molding the block 2 described above with respect to FIGS. 2A-2I. For this reason, forming the block 202 will be referred to as molding the block 202 in reference to the method 200. However, a person of skill in the art will appreciate that other methods of forming the block, including methods other than those performed by the system of FIGS. 1, 3A, and 3B, or via methods other than those described above with respect to FIGS. 2A-2I.

After the block 2 has been formed (202), the method 200 can include, at 204, thermally conditioning the block 2. As described above, various factors of the block 2 can result in cracking or failure of the block 2 due to rapid or uneven cooling, and thus rapid or uneven shrinking of the block 2 during cooling, (e.g., block size, thermal properties of the molding material used to form the block 2). The thermal conditioning of the block 2 can provide one or more intermediate cooling steps that will allow the block 2 to achieve one or more intermediate temperatures between the processing temperature at which the block 2 leaves the molding 202 and a final, cooled temperature (e.g., room temperature), while reducing or minimizing rapid shrinking or non-uniform shrinking, or both, of the block 2.

In an example, shown in FIG. 4A, a thermal conditioning method 200 can include a single thermal conditioning step 204 where the block 2 is held at a single intermediate temperature between the processing temperature associated with molding the block 202 and the final cooled temperature. In another example, shown in FIG. 4B, an example method 210 can include a plurality of thermal conditioning steps, e.g., two or more thermal conditioning steps. In the example shown in FIG. 4B, the method 210 includes three thermal conditioning steps: a first thermal conditioning step 212A, wherein the surroundings of the block 2 are held at a first intermediate temperature that is lower than the processing temperature but higher than the final cooled temperature; a second thermal conditioning step 212B performed after the first thermal conditioning step 212A, wherein the surroundings of the block 2 are held at a second intermediate temperature that is lower than the first intermediate temperature but higher than the final cooled temperature; and a third thermal conditioning step 212C performed after the second thermal conditioning step 212B, where the surroundings of the block 2 are held at a third intermediate temperature that is lower than the second intermediate temperature, but higher than the final cooled temperature.

Each thermal conditioning step 204 can also allow the block 2 to reach a uniform or substantially uniform intermediate temperature throughout the block 2, e.g., in the block core and at the block surfaces, before allowing the block 2 to be cooled in a subsequent cooling step. Uniform or substantially uniform temperature can minimize or reduce uneven or non-uniform shrinking of the block 2 during cooling, which can minimize or reduce cracking or other damage to the block 2.

In an example, the thermal conditioning step 204 can include holding the environment surrounding the block 2 at one or more intermediate temperatures between the processing temperature (e.g., molding temperature) of the material of the block 2 and a final cooled temperature to which the block 2 will be cooled, such as room temperature, e.g., around 20 °C. The thermal conditioning step 204 can include holding the block 2 for a specified period time for each of the one or more intermediate temperatures.

The number of intermediate temperatures (e.g., the number of thermal conditioning steps 204, 212A, 212B, 212c), the specific temperatures for each of the one or more thermal conditioning steps 204, 212A, 212B, 212C, and the duration of each thermal conditioning step 204, 212A, 212B, 212C (e.g., the amount of time that the environmental surroundings of the block 2 are held at each of the one or more intermediate temperatures) can be selected based on several factors including, but not limited to, one or more of:

(a) the processing temperature of the molding material of the block 2, both in the absolute sense (e.g., the actual temperature of the block 2 as it exits the mold), and how much higher the processing temperature is than the temperature of the thermal conditioning step 204 in a method 200 with a single thermal conditioning step 204 or the first thermal conditioning step 212 in a multi-thermal conditioning step method 210;
(b) one or more thermal properties of the molding material that forms the block 2, such as coefficient of thermal expansion, specific heat, and thermal conductivity;
(c) one or more mechanical properties of the molding material of the block, such as ductility or modulus;
(d) the temperature to which the block 2 is to be cooled, e.g., the final cooled temperature; and
(e) the amount of time in which the block 2 has to cool in order to reach the final cooled temperature, e.g., the desired processing time.

The specific intermediate temperature for each thermal conditioning step 204, 212A, 212B, 212C can also depend on the difference in temperature between the preceding step and the desired final cooled temperature. The duration of each thermal conditioning step 204, 212A, 212B, and 212C can also depend on the difference in temperature between the intermediate temperature for that thermal conditioning step 204, 212A, 212B, 212C and the temperature of the preceding processing step. For example, when there is only one thermal conditioning step 204, as in the example method 200 of FIG. 4A, then the difference between the processing temperature for molding the block 202 and the thermal conditioning step 204 can determine the duration of the thermal conditioning step 204, e.g., with a larger difference in temperature tending to require a longer duration for the thermal conditioning step 204 so that the substantially the entirety of the block 2 can reach the intermediate holding temperature of the thermal conditioning step 204 so that the block 2 has a uniform or substantially uniform temperature throughout.

In an example, thermal conditioning (e.g., the single thermal conditioning step 204 or the plurality of thermal conditioning steps 212A, 212B, and 212C) can include placing the block 2 in an interior of a thermal conditioning oven or other heating device. The thermal conditioning oven can be configured to hold the temperature within the interior at a set temperature, e.g., the specific intermediate temperature of the thermal conditioning step 204, 212A, 212B, 212D. The thermal conditioning oven can include a temperature control system to control the temperature within the interior of the thermal conditioning oven to reach a set point. In an example, the control system can include a temperature sensor, a heating device, and a controller to control the heating output of the heating device based on a temperature measured by the temperature sensor compared to a set temperature. The control system can also including a timing device configured to maintain the temperature in the thermal conditioning oven at the set point for a specified period of time before releasing the block 2 from the thermal conditioning oven at the conclusion of the thermal conditioning step 204 (as in the method 200 of FIG. 4A) or the final thermal conditioning step 212C (as in the method 210 of FIG. 4B).

After the thermal conditioning step 204 or the final thermal conditioning step 212C, at 206, the method 200, 210 can include cooling the block 2 to a final cooled temperature. In an example, the cooling 206 can include exposing the block 2 to air in order to allow the block 2 to cool down to the temperature of the air. For this reason, the step of cooling 206 will be referred to herein as air cooling 206. Other methods of cooling the block 2 can be used, such as cooling fans, fooling liquids or other cooling fluids, chillers, and the like.

For the purpose of illustration, a method of thermal conditioning (e.g., method 200) will be described for a specific material, in this case polyether ether ketone (PEEK), which, as noted above, has thermal and mechanical properties that can result in cracking or other failure of a block 2 as it cools from the processing temperature of molding the block 202 to the specified final cooled temperature. The specific details of the exemplary method described with respect to PEEK are not intended to be limiting, but are simply meant for the purposes of illustration. Other processing parameters may be used for other materials, or even for another method using PEEK as the molding material, but where other factors (such as block size or environmental conditions) are different.

In the exemplary method, 25 centimeter (cm) long by 25 cm wide by 8 cm thick blocks of PEEK was molded, for example via the method shown in FIGS. 2A-2I. The PEEK blocks exited the molding system at a temperature of about 200 °C. One PEEK block was simply taken out of the molding system and allowed to air cool. Internal stresses due to air cooling of the PEEK block resulted in cracking and total failure of the block after about 3 hours of cooling.

A second PEEK block was placed into an oven substantially immediately after molding. The oven was set at 120 °C, and the PEEK block was kept in the oven for 2 hours so that the temperature of the PEEK block was substantially uniform at about 120 °C after thermal conditioning in the oven. The PEEK block at 120 °C was removed from the oven and allowed to cool for another 2 to 3 hours until the temperature of the PEEK block was substantially uniformly at about 20 °C. The PEEK block that was placed in the oven at 120 °C as an intermediate thermal conditioning step did not crack or fail.

The above Detailed Description is intended to be illustrative, and not restrictive. For example, the above-described examples (or one or more elements thereof) can be used in combination with each other. Other embodiments can be used, such as by one of ordinary skill in the art upon reviewing the above description. Also, various features or elements can be grouped together to streamline the disclosure. This should not be interpreted as intending that an unclaimed disclosed feature is essential to any claim. Rather, inventive subject matter is set forth by the claims and can lie in less than all features of a particular disclosed embodiment. Thus, the following claims are hereby incorporated into the Detailed Description, with each claim standing on its own as a separate embodiment. The scope of the invention should be determined with reference to the appended claims.

In this document, the terms "a" or "an" are used, as is common in patent documents, to include one or more than one, independent of any other instances or usages of "at least one" or "one or more." In this document, the term "or" is used to refer to a nonexclusive or, such that "A or B" includes "A but not B," "B but not A," and "A and B," unless otherwise indicated. In this document, the terms "including" and "in which" are used as the plain-English equivalents of the respective terms "comprising" and "wherein." Also, in the following claims, the terms "including" and "comprising" are open-ended, that is, a molding system, device, article, composition, formulation, or process that includes elements in addition to those listed after such a term in a claim are still deemed to fall within the scope of that claim. Moreover, in the following claims, the terms "first," "second," and "third," etc. are used merely as labels, and are not intended to impose numerical requirements on their objects.

Method examples described herein can be machine or computer-implemented, at least in part. Some examples can include a computer-readable medium or machine-readable medium encoded with instructions operable to configure an electronic device to perform methods or method steps as described in the above examples. An implementation of such methods or method steps can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

**Claims**

1. A molding system for fabricating a part, the molding system comprising:

   a first mold section (12) defining a first mold cavity (14);
   a first insert (56) slidable to a plurality of positions relative to the first mold cavity (14) to adjust a dimension of the mold cavity (14);
   a second mold section (20) to be disposed adjacent to the first mold section (12) to at least partially enclose the first mold cavity (14);
   a molding material conduit (26) to be disposed in fluid communication with the first mold cavity (14); and
   a positioning mechanism (24) configured to move the first insert (56) to the plurality of positions relative the first mold cavity (14);
   **characterized in that** the mechanism comprises a wedge (60) having an angled surface (62), wherein the mechanism bears on a corresponding angled surface (66) of the first insert (56) to allow the insert (56) to be positioned at essentially any position along the continuum from a front end of the mold cavity (54) to a practical rear boundary, and the molding system further comprises a sliding locking mechanism coupling the wedge (60) to the first insert (56); and wherein the molding system further comprises a second mechanism configured to position the solidified molding material in the mold cavity (14).

2. The molding system of claim 1, wherein the angled surface (62) forms an angle with a direction of movement of the first insert (56) of from about 45° to about 90°.

3. The molding system of claim 1, wherein the sliding locking mechanism comprises one of: a tongue on the wedge (60) inserted into and slidable along a corresponding groove in the first insert (56), or a tongue on the first insert (56) inserted into and slidable along a corresponding groove in the wedge (60).

4. The molding system of claim 1, wherein the second mechanism (84) comprises one or more second inserts (82) slidable within the second mold section (20).

5. A method of fabricating a part, the method comprising:

   disposing a first mold section (12) adjacent to a second mold section (20) to at least partially enclose a first mold cavity (14) therebetween;
   positioning a slidable insert (56) at a first position within the first mold cavity (14) to provide a first space having a predetermined first thickness at a front end of the mold cavity (14);
   injecting a first molten molding material into the first space of the mold cavity (14);
   allowing the first molten molding material to set to form a first layer of a block;
   moving the slidable insert to a second position within the mold cavity to provide a second space having a predetermined second thickness between the first layer and the front end of the mold cavity (14);
   injecting a second molten molding material into the second space of the mold cavity (14); and
   allowing the second molten molding material to set to form a second layer, the second layer being mechanically coupled to the first layer to form a part after the second molten molding material sets;
   **characterized in that** the positioning the slidable insert at the first position and moving the slidable insert (56) to the second position is performed by an insert positioning mechanism (24) comprising a wedge (60) having an angled surface (62), wherein the angled surface (62) bears on a corresponding angled surface (66) of the first insert (56), and the wedge (60) is slidably coupled to the first insert (56);
   wherein positioning the first insert (56) comprises moving the first insert (56) to any position along a continuum between a rearward position and a forward position to provide the first space having the predetermined first thickness; and further comprising positioning the solidified molding material in the mold cavity (14) with a second mechanism.

6. The method of claim 5, wherein the second molten molding material is the same materials as the first molten molding material.

7. The method of claim 5, wherein the second layer is mechanically coupled and chemically coupled to the first layer to form the part after the second molten molding material sets.

8. The method of claim 5, further comprising:

   moving the slidable insert (56) to a third position within the mold cavity (14) to provide a third space having a predetermined third thickness between the second layer and the front end of the mold cavity (14);
   injecting a third molten molding material into the third space of the mold cavity (14); and allowing the molten material to set to form a third layer, the third layer being mechanically coupled to the second layer after the third molten molding material sets, the first layer, second layer, and third layer forming the part.

9. The method of claim 5, further comprising expulsing the part from the mold cavity (14).

10. The method of claim 9, further comprising, after expulsing the part from the mold cavity (14), performing one or more thermal conditioning steps on the part, preferably applying a plurality of thermal conditioning steps, preferably wherein a plurality of thermal conditioning steps are performed on the part and each intermediate temperature of each of the thermal conditioning steps is less than a temperature of a preceding step and more than a temperature of a subsequent step.

11. The method of claim 10, further comprising cooling the block after applying the thermal conditioning steps.

12. The method of claim 10, wherein the slidable coupling of the wedge (60) to the first insert (56) is achieved with a sliding locking mechanism comprises one of: a tongue on the wedge (60) inserted into and slidable along a corresponding groove in the first insert (56), or a tongue on the first insert (56) inserted into and slidable along a corresponding groove in the wedge (60).

13. The method of claim 5, wherein the predetermined first thickness can be changed.

**Patentansprüche**

1. Formsystem zum Fertigen eines (Bau-)Teils, wobei das Formsystem Folgendes umfasst:

einen ersten Formabschnitt (12), der einen ersten Formhohlraum (14) definiert;
einen ersten Einsatz (56), der in eine Vielzahl von Positionen relativ zu dem ersten Formhohlraum (14) verschiebbar ist, um eine Dimension des Formhohlraums (14) einzustellen,
einen zweiten Formabschnitt (20), der angrenzend an den ersten Formabschnitt (12) anzuordnen ist, um den ersten Formhohlraum (14) zumindest teilweise zu umschließen;
eine Formmaterial-Leitung (26), die in Fluidverbindung mit dem ersten Formhohlraum (14) anzuordnen ist, und
einen Positionierungsmechanismus (24), der dazu ausgestaltet ist, den ersten Einsatz (56) in die Vielzahl von Positionen relativ zum ersten Formhohlraum (14) zu bewegen,
**dadurch gekennzeichnet, dass** der Mechanismus einen Keil (60) mit einer abgeschrägten Oberfläche (62) umfasst, wobei der Mechanismus an einer entsprechenden abgeschrägten Oberfläche (66) des ersten Einsatzes (56) anliegt, um zu ermöglichen, dass der Einsatz (56) an im Wesentlichen einer beliebigen Position entlang des Kontinuums von einem vorderen Ende des Formhohlraums (54) zu einer konkreten hinteren Grenze positioniert werden kann, und das Formsystem des Weiteren einen Schiebearretiermechanismus umfasst, der den Keil (60) an den ersten Einsatz (56) koppelt, und wobei das Formsystem des Weiteren einen zweiten Mechanismus umfasst, der dazu ausgestaltet ist, das verfestigte Formmaterial in dem Formhohlraum (14) zu positionieren.

2. Formsystem gemäß Anspruch 1, wobei die abgeschrägte Oberfläche (62) einen Winkel von etwa 45° bis etwa 90° mit der Bewegungsrichtung des ersten Einsatzes (56) bildet.

3. Formsystem gemäß Anspruch 1, wobei der eine Schiebearretiermechanismus eines der Folgenden umfasst: eine Feder auf dem Keil (60), die in eine entsprechende Nut in dem ersten Einsatz (56) eingeführt ist und entlang dieser verschiebbar ist, oder eine Feder auf dem ersten Einsatz (56), die in eine entsprechende Nut in dem Keil (60) eingeführt ist und entlang dieser verschiebbar ist.

4. Formsystem gemäß Anspruch 1, wobei der zweite Mechanismus (84) einen oder mehrere zweite Einsätze (82) umfasst, die innerhalb des zweiten Formabschnitts (20) verschiebbar sind.

5. Verfahren zum Fertigen eines (Bau-)Teils, wobei das Verfahren Folgendes umfasst:

Anordnen eines ersten Formabschnitts (12) angrenzend an einen zweiten Formabschnitt (20), um einen ersten Formhohlraum (14) zwischen diesen zumindest teilweise zu umschließen,
Positionieren eines verschiebbaren Einsatzes (56) an einer ersten Position innerhalb des ersten Formhohlraums (14), um einen ersten Raum, der eine vorgegebene erste Dicke aufweist, an einem vorderen Ende des Formhohlraums (14) bereitzustellen,
Einspritzen eines ersten geschmolzenen Formmaterials in den ersten Raum des Formhohlraums (14),
Aushärtenlassen des ersten geschmolzenen Formmaterials, um eine erste Schicht eines Blocks auszubilden,

Bewegen des verschiebbaren Einsatzes auf eine zweite Position innerhalb des Formhohlraums, um einen zweiten Raum, der eine vorgegebene zweite Dicke aufweist, zwischen der ersten Schicht und dem vorderen Ende des Formhohlraums (14) bereitzustellen,

Einspritzen eines zweiten geschmolzenen Formmaterials in den zweiten Raum des Formhohlraums (14) und

Aushärtenlassen des zweiten geschmolzenen Formmaterials, um eine zweite Schicht zu bilden, wobei die zweite Schicht mechanisch an die erste Schicht gekoppelt wird, um, nachdem das zweite geschmolzene Formmaterial ausgehärtet ist, ein (Bau-)Teil zu bilden,

**dadurch gekennzeichnet, dass** das Positionieren des verschiebbaren Einsatzes an der ersten Position und das Bewegen des verschiebbaren Einsatzes (56) auf die zweite Position mittels eines Einsatzpositionierungsmechanismus (24) durchgeführt wird, der einen Keil (60) mit einer abgeschrägten Oberfläche (62) umfasst, wobei die abgeschrägte Oberfläche (62) an einer entsprechenden abgeschrägten Oberfläche (66) des ersten Einsatzes (56) anliegt und der Keil (60) verschiebbar an den ersten Einsatz (56) gekoppelt ist,

wobei eine Positionierung des ersten Einsatzes (56) ein Bewegen des ersten Einsatzes (56) auf eine beliebige Position entlang eines Kontinuums zwischen einer hinteren Position und einer vorderen Position umfasst, um den ersten Raum, der die vorgegebene erste Dicke aufweist, bereitzustellen, und

wobei das Verfahren des Weiteren eine Positionierung des verfestigten Formmaterials in dem Formhohlraum (14) mithilfe eines zweiten Mechanismus umfasst.

6. Verfahren gemäß Anspruch 5, wobei das zweite geschmolzene Formmaterial das gleiche Material wie das erste geschmolzene Formmaterial ist.

7. Verfahren gemäß Anspruch 5, wobei die zweite Schicht mechanisch und chemisch an die erste Schicht gekoppelt wird, um, nachdem das zweite geschmolzene Formmaterial ausgehärtet ist, das (Bau-)Teil zu bilden.

8. Verfahren gemäß Anspruch 5, des Weiteren umfassend:

Bewegen des verschiebbaren Einsatzes (56) auf eine dritte Position innerhalb des Formhohlraums (14), um einen dritten Raum mit einer vorgegebenen dritten Dicke zwischen der zweiten Schicht und dem vorderen Ende des Formhohlraums (14) bereitzustellen,

Einspritzen eines dritten geschmolzenen Formmaterials in den dritten Raum des Formhohlraums (14), und

Aushärtenlassen des geschmolzenen Materials, um eine dritte Schicht zu bilden, wobei die dritte Schicht mechanisch an die zweite Schicht gekoppelt wird, nachdem das dritte geschmolzene Formmaterial ausgehärtet ist, wobei die erste Schicht, die zweite Schicht und die dritte Schicht das (Bau-)Teil bilden.

9. Verfahren gemäß Anspruch 5, das des Weiteren ein Ausstoßen des (Bau-)Teils aus dem Formhohlraum (14) umfasst.

10. Verfahren gemäß Anspruch 9, das des Weiteren nach dem Ausstoßen des (Bau-)Teils aus dem Formhohlraum (14) ein Durchführen eines oder mehrerer thermischer Konditionierungsschritte an dem (Bau-)Teil, vorzugsweise das Anwenden einer Vielzahl von thermischen Konditionierungsschritten, umfasst, wobei vorzugsweise eine Vielzahl von thermischen Konditionierungsschritten an dem (Bau-)Teil durchgeführt werden und jede mittlere Temperatur eines jeden der thermischen Konditionierungsschritte geringer als die Temperatur eines vorhergehenden Schritts und höher ist als die Temperatur eines nachfolgenden Schritts ist.

11. Verfahren gemäß Anspruch 10, das des Weiteren einen Kühlen des Blocks nach Anwenden der thermischen Konditionierungsschritte umfasst.

12. Verfahren gemäß Anspruch 10, wobei die verschiebbare Kopplung des Keils (60) an den ersten Einsatz (56) mit einem Schiebearretiermechanismus erreicht wird, der eines der Folgenden umfasst: eine Feder auf dem Keil (60), die in eine entsprechende Nut in dem ersten Einsatz (56) eingeführt ist und entlang dieser verschiebbar ist, oder eine Feder auf dem ersten Einsatz (56), die in eine entsprechende Nut in dem Keil (60) eingeführt ist und entlang dieser verschiebbar ist.

13. Verfahren gemäß Anspruch 5, wobei die vorgegebene erste Dicke verändert werden kann.

**Revendications**

1. Système de moulage pour fabriquer une pièce, le système de moulage comprenant :

une première section de moule (12) définissant une première cavité de moule (14) ; un premier insert (56) pouvant coulisser sur une pluralité de positions par rapport à la première cavité de moule (14) afin d'ajuster une dimension de la cavité de moule (14) ;

une seconde section de moule (20) destinée à être disposée de manière adjacente à la première section de moule (12) afin d'enfermer au moins partiellement la première cavité de moule (14) ;

un conduit de matériau de moulage (26) destiné à être disposé en communication fluidique avec la première cavité de moule (14) ; et

un mécanisme de positionnement (24) configuré pour déplacer le premier insert (56) sur la pluralité de positions par rapport à la première cavité de moule (14) ;

**caractérisé en ce que** le mécanisme comprend une cale (60) ayant une surface en angle (62), dans lequel le mécanisme s'appuie sur une surface en angle (66) correspondante du premier insert (56) pour permettre à l'insert (56) d'être positionné essentiellement à n'importe quelle position le long du continuum à partir d'une extrémité avant de la cavité de moule (54) jusqu'à une limite arrière pratique, et le système de moulage comprend en outre un mécanisme de blocage de coulissement couplant la cale (60) au premier insert (56) ; et

dans lequel le système de moulage comprend en outre un second mécanisme configuré pour positionner le matériau de moulage solidifié dans la cavité de moule (14).

2. Système de moulage selon la revendication 1, dans lequel la surface en angle (62) forme un angle avec une direction de déplacement du premier insert (56) d'environ 45° à environ 90°.

3. Système de moulage selon la revendication 1, dans lequel le mécanisme de blocage de coulissement comprend l'une parmi : une languette sur la cale (60) insérée dans et pouvant coulisser le long d'une rainure correspondante dans le premier insert (56), ou une languette sur le premier insert (56) insérée dans et pouvant coulisser le long d'une rainure correspondante dans la cale (60).

4. Système de moulage selon la revendication 1, dans lequel le second mécanisme (84) comprend un ou plusieurs seconds inserts (82) pouvant coulisser à l'intérieur de la seconde section de moule (20).

5. Méthode pour fabriquer une pièce, la méthode comprenant :

la disposition d'une première section de moule (12) adjacente à une seconde section de moule (20) pour enfermer au moins partiellement une première cavité de moule (14) entre elles ;

le positionnement d'un insert pouvant coulisser (56) dans une première position dans la première cavité de moule (14) pour fournir un premier espace ayant une première épaisseur prédéterminée au niveau d'une extrémité avant de la cavité de moule (14) ;

l'injection d'un premier matériau de moulage en fusion dans le premier espace de la cavité de moule (14) ;

la permission au premier matériau de moulage en fusion de durcir pour former une première couche d'un bloc ;

le déplacement de l'insert pouvant coulisser dans une deuxième position dans la cavité de moule pour fournir un deuxième espace ayant une deuxième épaisseur prédéterminée entre la première couche et l'extrémité avant de la cavité de moule (14) ;

l'injection d'un deuxième matériau de moulage en fusion dans le deuxième espace de la cavité de moule (14) ; et

la permission au deuxième matériau de moulage en fusion de durcir pour former une deuxième couche, la deuxième couche étant mécaniquement couplée à la première couche afin de former une pièce après que le deuxième matériau de moulage en fusion a durci ;

**caractérisé en ce que** le positionnement de l'insert pouvant coulisser dans la première position et le déplacement de l'insert pouvant coulisser (56) dans la deuxième position est réalisé par un mécanisme de positionnement d'insert (24) comprenant une cale (60) ayant une surface en angle (62), dans laquelle la surface en angle (62) s'appuie sur une surface en angle (66) correspondante du premier insert (56), et la cale (60) est couplée de manière coulissante au premier insert (56) ;

dans laquelle le positionnement du premier insert (56) comprend le déplacement du premier insert (56) dans n'importe quelle position le long d'un continuum entre une position vers l'arrière et une position vers l'avant pour fournir le premier espace ayant la première épaisseur prédéterminée ; et

comprenant en outre le positionnement du matériau de moulage solidifié dans la cavité de moule (14) avec un second mécanisme.

6. Méthode selon la revendication 5, dans laquelle le deuxième matériau de moulage en fusion est le même matériau que le premier matériau de moulage en fusion.

7. Méthode selon la revendication 5, dans laquelle la deuxième couche est couplée mécaniquement et couplée chimiquement à la première couche afin de former la pièce après que le deuxième matériau de moulage en fusion a durci.

**8.** Méthode selon la revendication 5, comprenant en outre :

le déplacement de l'insert pouvant coulisser (56) dans une troisième position dans la cavité de moule (14) pour fournir un troisième espace ayant une troisième épaisseur prédéterminée entre la deuxième couche et l'extrémité avant de la cavité de moule (14) ; l'injection d'un troisième matériau de moulage en fusion dans le troisième espace de la cavité de moule (14) ; et la permission au matériau en fusion de durcir afin de former une troisième couche, la troisième couche étant mécaniquement couplée à la deuxième couche après que le troisième matériau de moulage en fusion a durci, la première couche, la deuxième couche et la troisième couche formant la pièce.

**9.** Méthode selon la revendication 5, comprenant en outre l'expulsion de la pièce de la cavité de moule (14).

**10.** Méthode selon la revendication 9, comprenant en outre, après l'expulsion de la pièce de la cavité de moule (14), la réalisation d'une ou plusieurs étapes de conditionnement thermique sur la pièce, de préférence l'application d'une pluralité d'étapes de conditionnement thermique, de préférence dans laquelle une pluralité d'étapes de conditionnement thermique sont réalisées sur la pièce et chaque température intermédiaire de chacune des étapes de conditionnement thermique est inférieure à une température d'une étape précédente et supérieure à une température d'une étape suivante.

**11.** Méthode selon la revendication 10, comprenant en outre le refroidissement du bloc après l'application des étapes de conditionnement thermique.

**12.** Méthode selon la revendication 10, dans laquelle le couplage pouvant coulisser de la cale (60) avec le premier insert (56) est obtenu avec un mécanisme de blocage de coulissement comprenant l'une parmi : une languette sur la cale (60) insérée dans et pouvant coulisser le long d'une rainure correspondante dans le premier insert (56), ou une languette sur le premier insert (56) insérée dans et pouvant coulisser le long d'une rainure correspondante dans la cale (60).

**13.** Méthode selon la revendication 5, dans laquelle la première épaisseur prédéterminée peut être modifiée.

**FIG. 1**

**FIG. 2A**

**FIG. 2B**

**FIG. 2C**

50

70

58

56  82  80

54

66

60

84

52

86

84

82

62

4A

**FIG. 2D**

**FIG. 2E**

**FIG. 2F**

**FIG. 2G**

**FIG. 2H**

**FIG. 2I**

**FIG. 3A**

**FIG. 3B**

**200**

```
        ┌──────────────────────┐  ⌐202
        │     FORM BLOCK       │
        └──────────────────────┘
                   │
                   ▼            ⌐204
        ┌──────────────────────┐
        │      THERMAL         │
        │ CONDITIONING STEP    │
        └──────────────────────┘
                   │
                   ▼            ⌐206
        ┌──────────────────────┐
        │      COOLING         │
        └──────────────────────┘
```

**FIG. 4A**

**210**

```
        ┌──────────────────────┐  ⌐202
        │     FORM BLOCK       │
        └──────────────────────┘
                   │            ⌐212A
                   ▼
        ┌──────────────────────┐
        │   FIRST THERMAL      │
        │ CONDITIONING STEP    │
        └──────────────────────┘
                   │            ⌐212B
                   ▼
        ┌──────────────────────┐
        │  SECOND THERMAL      │
        │ CONDITIONING STEP    │
        └──────────────────────┘
                   │            ⌐212C
                   ▼
        ┌──────────────────────┐
        │   THIRD THERMAL      │
        │ CONDITIONING STEP    │
        └──────────────────────┘
                   │            ⌐206
                   ▼
        ┌──────────────────────┐
        │      COOLING         │
        └──────────────────────┘
```

**FIG. 4B**